# EUROPEAN PATENT APPLICATION

(11) **EP 2 832 870 A1**
(43) Date of publication of application: **04.02.2015**
(21) Application number: 12873204.7
(22) Date of filing: 28.03.2012
(51) Int. Cl.: C21D 9/40, F16G 5/16

(54) **METHOD AND DEVICE FOR MANUFACTURING ENDLESS METAL RING, AND ENDLESS METAL RING**

(71) Applicant: Toyota Jidosha Kabushiki Kaisha, Toyota-shi, Aichi-ken, 471-8571 (JP)
(72) Inventor: NISHIDA Koji, Toyota-shi, Aichi-ken, 471-8571 (JP); AOTO Ichiro, Toyota-shi, Aichi-ken, 471-8571 (JP); ADOMI Ryo, Toyota-shi, Aichi-ken, 471-8571 (JP)
(74) Representative: Smith, Samuel Leonard
(86) International application number: PCT/JP2012/058124
(87) International publication number: WO 2013/145149

(57) **Abstract**

A method for manufacturing an endless metal ring whereby an annular member comprising maraging steel containing molybdenum is cut into ring bodies having a prescribed width, wherein melted/solidified layers are formed on the outer circumference of the annular member, and the melted/solidified layers are connected continuously in the circumferential direction of the ring bodies.

## Description

### TECHNICAL FIELD

The present invention relates to a method for manufacturing an endless metal ring to be used for power transmitting of a continuously variable transmission of a vehicle and a manufacturing device thereof, and the endless metal ring.

### BACKGROUND ART

As a continuously variable transmission (CVT) mounted in a vehicle, for example, there is used a belt-type CVT arranged such that an endless metal belt consisting of a plurality of stacked endless metal rings and a plurality of elements engaged with the rings, the endless metal ring being circumferentially moveable between a drive shaft pulley and a driven shaft pulley. This CVT can continuously change a transmission gear ratio in stepless manner, differently from a multistage transmission that shifts gears by changing combinations of gears. Thus, the CVT has superior fuel efficiency. In recent years, a gear ratio range tends to be increased for the purpose of further improving the fuel efficiency. However, such an increased gear ratio range causes an increase in load applied to the belt. Thus, a stronger endless metal ring than at present is demanded.

In general, as a material used for manufacturing an endless metal ring, there is known maraging steel having excellent strength characteristics. In order to increase the strength (in particular, fatigue strength) of an endless metal ring made of this maraging steel, there is disclosed a technique to generate reverse-transformed austenite phase by heating the endless metal ring in a specific range (about 500 to 750°C) of a lower temperature than an austenitizing start temperature of about 750°C (see Patent Documents 1 and 2, for example).

On the other hand, a factor that lowers the fatigue limit of the endless metal ring made of maraging steel in a very high cycle region (a region exceeding 10⁷ cycles) is known as initiating at inner inclusions (TiN and others). Accordingly, a technique is disclosed in which raw material for Ti-containing steel (e.g., maraging steel) free from TiN inclusions is melted in a vacuum induction furnace and is cast as an electrode, and the thus obtained Ti-containing steel is re-melted by a vacuum arc melting method, thereby refining or miniaturizing the TiN inclusions (e.g., see Patent Document 3).

### RELATED ART DOCUMENTS

### PATENT DOCUMENTS

Patent Document 1: JP-A-2002-3946
Patent Document 2: JP-A-2004-315875
Patent Document 3: JP-A-2001-214212

### SUMMARY OF INVENTION

### PROBLEMS TO BE SOLVED BY THE INVENTION

However, when a large amount of the reverse-transformed austenite phase is generated (15 to 25% by volume or 25 to 35% by volume) as in the techniques in Patent Documents 1 and 2, elongation increases in a tensile test, but yield strength decreases. Thus, fatigue life under high load obviously lowers. For example, according to an article "Influence of Reversion Austenite on Fatigue Property of 18%Ni Maraging Steel" in "Materials" (J.Soc, Mat.Sci., Japan), Vol. 44, No. 497, pp. 181-186, Feb. 1995), the reverse-transformed austenite enhances the fatigue strength in the maraging steel up to on the order of 2 to 3% by volume.

However, it is necessary to hold the aging temperature at about 480°C for 100 hours or more or at about 530°C for 7 hours or more to stably control the residual austenite amount of on the order of 2 to 3% by volume by utilizing reverse transformation. Either case results in largely deteriorated productivity. In this case, a high temperature of about 600°C is conceivable to enable a short-time treatment; however, this causes a problem that a nitride state varies or the austenite amount varies even under the same nitriding conditions, and thus stable strength could not be ensured.

In mass-production facilities in which re-melting by the vacuum arc melting method is conducted as in the technique of Patent Document 3, a cooling speed is generally slow and it is difficult to stably refine the size of the non-metallic inclusions to about 7 µm or less which is the size less likely to initiate fatigue failure. To increase the cooling speed in the mass-production facilities using re-melting by the vacuum arc melting method, it is preferable to reduce an amount of the material to be melted. However, this method greatly deteriorates the productivity and thus is not practical. Furthermore, in view of costs, it is not preferable to use high quality raw material free from non-metallic inclusions.

The present invention has been made to solve the above problems and has a purpose to provide a method for manufacturing an endless metal ring, capable of refining a non-metallic inclusion to improve fatigue strength while ensuring a predetermined residual austenite amount without impeding the productivity, a manufacturing device, and an endless metal ring.

### MEANS OF SOLVING THE PROBLEMS

(1) To achieve the above purpose, one aspect of the invention provides a method of manufacturing an endless metal ring by cutting an annular member made of maraging steel containing molybdenum into a ring element having a predetermined width, wherein the method includes forming a melted-solidified layer on an outer circumference of the annular member so that the melted-solidified layer is arranged to be continuous in a circumferential direction.

According to the above aspect in which the melted-solidified layer is formed on the outer circumference of the annular member made of maraging steel containing molybdenum, molybdenum (Mo) having a higher melting point than other alloy elements is preferentially solidified on the melted-solidified layer, forming a segregated area. Molybdenum is an austenite stabilizing element and thus the molybdenum segregated area contains much residual austenite phases in portions where austenite should inherently transform into martensite.

Since the melted-solidified layer is formed to be continuous in the circumferential direction of the ring element, the ring element is formed with the molybdenum segregated area continuous in the circumferential direction. That is, the residual austenite phases left by the molybdenum segregated area are formed to be continuous in the circumferential direction of the ring element. Austenite partially transforms into martensite (deformation induced martensite) under pressure from outside. At that time, a crystal structure changes from a face-centered cubic lattice to a body-centered cubic lattice with an expanded volume. Thus, compression stress acts on crystal grain boundary that is likely to be cracked. This can suppress development of cracks against external stress. The amount of residual austenite at that time is preferably on the order of 2 to 3% by volume which is effective for fatigue property. The present invention can realize this. The endless metal ring manufactured by the above method can provide greatly increased fatigue life even when constant stress amplitude repeatedly acts on the endless metal ring.

(2) In the method for manufacturing an endless metal ring set forth in (1), preferably, the melted-solidified layer is formed by locally heating and cooling the outer circumference of the annular member.

According to the above configuration, since the melted-solidified layer is formed by locally heating and cooling the outer circumference of the annular member, the molybdenum segregated area can be formed without deforming the annular member.

Because of the local heating and cooling, the melted-solidified layer is cooled immediately after it is melted. Accordingly, although the non-metallic inclusion such as TiN contained in a row material is dissolved in the course of melting, the cooling speed in the course of solidifying is fast and thus the growth of non-metallic inclusion during recrystallization is suppressed, thereby prompting refining. This refining of non-metallic inclusion enables suppression of fatigue failure which may initiate at the inclusion. The fatigue life of the endless metal ring can be further improved.

In this case, because of the local heating and cooling, it is unnecessary to perform re-melting in a raw-material manufacturing step as in the technique of Patent Document 3 and there is less influence on productivity. Furthermore, limitation to use only the high-pure raw material is reduced, contributing to cost reduction. The solution (annealing) heat treatment is performed after the melting-solidifying step as needed. This can uniformize molybdenum in the molybdenum segregated area.

(3) In the method for manufacturing an endless metal ring set forth in (1) or (2), preferably, the melted-solidified layer is formed by spirally or circularly heating and cooling the outer circumference of the annular member.

According to the above configuration, since the melted-solidified layer is formed by spirally or circularly (circumferentially) heating and cooling the outer circumference of the annular member, the spiral or circular width and feed pitch are arbitrarily set so that the melted-solidified layer is formed in the annular member over the entire circumference or in the part continuous in the circumferential direction. For instance, when the spiral or circular width and feed pitch are set within the width of the ring element, the outer circumference of the ring element can be formed with the melted-solidified layer of at least one turn. Thus, the molybdenum segregated area can be formed on the entire circumference of the ring element or may be formed only in a part desired for strengthening. This can ensure a predetermined residual austenite amount nearly equal in a predetermined width in the circumferential direction to improve the fatigue strength of the endless metal ring.

(4) In the method for manufacturing an endless metal ring set forth in (3), preferably, the melted-solidified layer is formed in an end of the ring element in an axial direction.

According to the above configuration, since the melted-solidified layer is formed in the axial end portion of the ring element, the predetermined residual austenite amount in the axial end portion of the ring element can be endured nearly equal in the circumferential direction. The stress amplitude during use of the endless metal ring in a CVT largely acts on the axial end portion more than an axial central portion of the endless metal ring. Thus, the predetermined residual austenite amount can be ensured to be nearly equal in the circumferential direction in the axial end portion of the endless metal ring on which the stress amplitude will largely acts. This can effectively improve the fatigue strength of the endless metal ring.

(5) In the method for manufacturing an endless metal ring set forth in (1) or (2), preferably, the melted-solidified layer is formed of a plurality of linear melted-solidified layers formed by heating and cooling the outer circumference of the annular member in an axial direction so that adjacent ones of the linear melted-solidified layers are continuous with each other.

According to the above configuration, since the melted-solidified layer is formed of a plurality of linear melted-solidified layers formed by heating and cooling the outer circumference of the annular member in the axial direction so that adjacent ones of the linear melted-solidified layers are continuous with each other. Thus, the predetermined residual austenite amount can be ensured to be nearly equal in the entire outer circumference of the annular member. Accordingly, the predetermined residual austenite amount can be ensured nearly equal in the entire circumference of the severed ring element having a predetermined width. Herein, when the linear melted-solidified layers are to be formed so that adjacent ones are continuous with each other, they do not always need to be continuous on the inner circumference side of the annular member as long as they are continuous on the outer circumference side. This is because, in a case where the endless metal ring is used in a CVT, the stress amplitude more largely acts on the outer circumferential side than on the inner circumferential side of the endless metal ring.

(6) In the method for manufacturing an endless metal ring set forth in any one of (2) to (5), preferably, the cooling is forcibly performed.

According to the above configuration, the forced cooling can shorten the solidification time, thereby enabling forming the melted-solidified layer while maintaining the outer shape and thickness of the annular member. Since the re-crystallization speed of TiN and others in the course of solidification is fast, the growth of non-metallic inclusion is suppressed and thus refining can be further prompted. In addition, this further prompted refining of non-metallic inclusion can suppress the fatigue failure which is likely to initiate at inclusion. This makes it possible to further improve the fatigue life of the endless metal ring.

(7) In the method for manufacturing an endless metal ring set forth in any one of (2) to (6), preferably, the heating is laser heating or plasma heating.

According to the above configuration, since the heating is laser heating or plasma heating, even alloy steel containing alloy elements (e.g., molybdenum) with heat input density and high melting point melts at high speed, thereby enabling forming the melted-solidified layer in a short time on the outer circumference of the annular member made of maraging steel containing molybdenum. Thus, the productivity of the endless metal ring is not inhibited. Since the laser heating or plasma heating is local heating and cooling, the refining of the non-metallic inclusion is prompted, thus suppressing fatigue failure which may initiate at inclusion.

(8) In the method for manufacturing an endless metal ring set forth in any one of (1) to (7), preferably, the annular member is formed by joining end portions of a plate material made of the maraging steel.

According to the above configuration, the annular member is formed by joining the ends of a plate material made of maraging steel. This annular member can be easily manufactured with an arbitrary outer diameter. This joining method includes diffusion joining and others as well as laser welding or plasma welding.

(9) In the method for manufacturing an endless metal ring set forth in any one of (1) to (8), preferably, the annular member is formed by extrusion-molding a billet made of the maraging steel.

According to the above configuration, since the annular member is formed by extrusion molding of a billet made of maraging steel, a seamless annular member can be manufactured. Since the seamless annular member made of maraging steel containing molybdenum is formed, the residual austenite is left to be continuous in a more uniform amount in the circumferential direction in the molybdenum segregated area formed by melting and solidifying.

(10) To achieve the above purpose, another aspect of the invention provides a device of manufacturing an endless metal ring, the device being to be used in the method of manufacturing an endless metal ring according to any one of claims 1 to 9, wherein the device includes a retaining device for retaining the annular member rotatably in a circumferential direction, and a local heating device that will be placed to aim at an outer circumferential surface of the annular member.

According to the above configuration, it is sufficient to provide the retaining device for retaining the annular member rotatably in the circumferential direction and the local heating device placed to aim at the outer circumferential surface of the annular member. Thus, the melted-solidified layer can be formed in a short time to be continuous on the outer circumference of the annular member with a simple device. For instance, the retaining device is configured to continuously rotate the annular member in order to form the melted-solidified layer in spiral or circular form and to intermittently rotate the annular member in order to form a plurality of linear melted-solidified layers. Movement of the annular member in the axial direction can be performed by the retaining device. Instead of moving the annular member in the axial direction, a torch of the local heating device may be moved or swung.

(11) To achieve the above purpose, another aspect of the invention provides an endless metal ring to be used in a continuously variable transmission for a vehicle, wherein the endless metal ring is made of low carbon alloy steel containing molybdenum, and a ring element is melted and solidified over an entire circumference or in a part continuous in a circumferential direction.

According to the above aspect, the endless metal ring to be used in a continuous variable transmission (CVT) for a vehicle is made of low carbon alloy steel containing molybdenum and the ring element is melted and solidified over the entire circumference or in a part continuous in the circumferential direction. Thus, the molybdenum segregated area is formed in the entire circumference or the part continuous in the circumferential direction of the endless metal ring. Since molybdenum is an austenite stabilizing element, much austenite phases are left in the molybdenum segregated area. Austenite transforms into martensite (deformation induced martensite) under external stress. At that time, the crystal structure changes from a face-centered cubic lattice to a body-centered cubic lattice with an expanded volume. Thus, compression stress acts on crystal grain boundary that is likely to be cracked. This can suppress development of cracks against external stress. Consequently, the endless metal ring can provide greatly increased fatigue life even when constant stress amplitude repeatedly acts on the endless metal ring. It is to be noted that the low carbon alloy steel forms less thermally transformed martensite, and thus can avoid an increase in hardness more than necessary and maintain predetermined elongation. According to the above configuration, it is possible to make sure the predetermined residual austenite amount continuous in the circumferential direction of the endless metal ring while maintaining the predetermined hardness and elongation, and improve fatigue strength to the stress amplitude repeatedly acting in the circumferential direction.

(12) In the endless metal ring set forth in (11), preferably, the low carbon alloy steel is maraging steel.

According to the above configuration, since the low carbon alloy steel is maraging steel, the excellent strength characteristic can be ensured by the aging treatment.

### EFFECTS OF THE INVENTION

According to the invention, it is possible to refine non-metallic inclusions and improve fatigue strength while ensuring a predetermined residual austenite amount without inhibiting productivity.

### BRIEF DESCRIPTION OF THE DRAWINGS

FIG. 1 is a manufacturing process of an endless metal ring in an embodiment according to the invention;
FIG. 2 is a detailed view of a melting-solidifying step of the manufacturing process shown in FIG. 1;
FIG. 3 is a detailed view of another melting-solidifying step of the manufacturing process shown in FIG. 1;
FIG. 4 is a detailed view of another melting-solidifying step of the manufacturing process shown in FIG. 1;
FIG. 5 is a schematic cross sectional view of a melted-solidified layer formed in an annular member in the melting-solidifying step shown in FIG. 1;
FIG. 6 is a schematic cross sectional view of the melted-solidified layer formed in end portions of a ring element in an axial direction in the melting-solidifying step shown in FIG. 1;
FIG. 7 is a graph showing residual austenite amount in each step of the manufacturing process shown in FIG. 1;
FIG. 8 is a graph showing non-metallic inclusion size before and after the melting-solidifying step of the manufacturing process shown in FIG. 1;
FIG. 9 is a graph (S-N curves) showing fatigue life of endless metal rings manufactured in the manufacturing process shown in FIG. 1; and
FIG. 10 is an overall view of the endless metal ring manufactured in the manufacturing process shown in FIG. 1.

### MODE FOR CARRYING OUT THE INVENTION

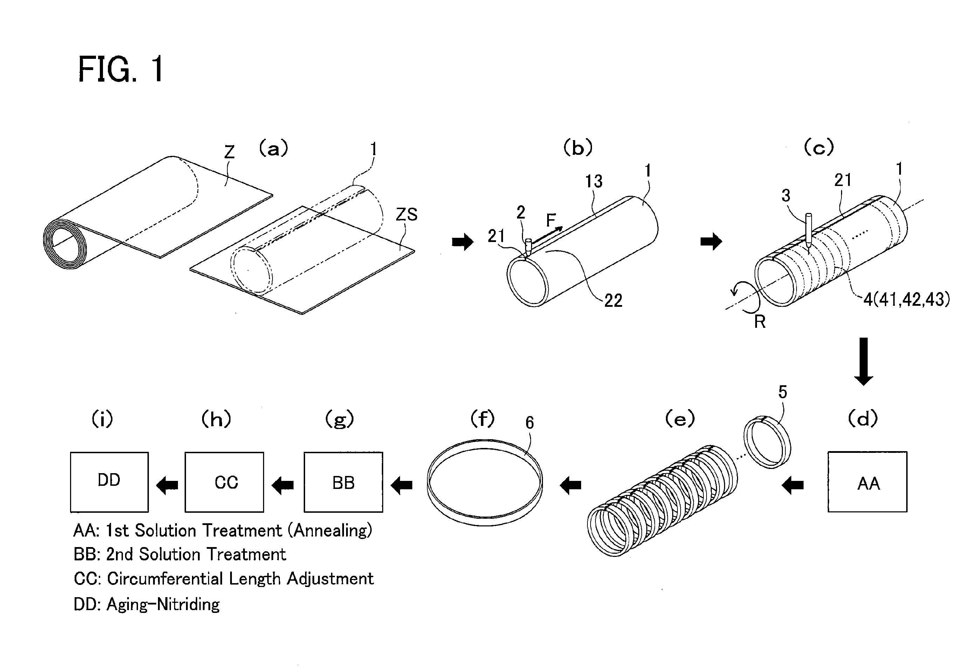

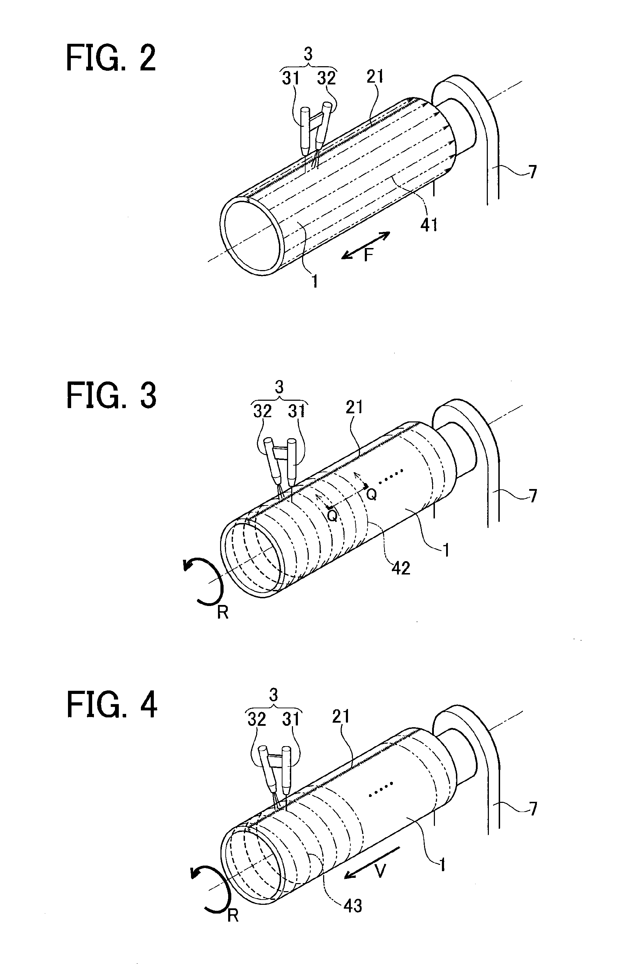

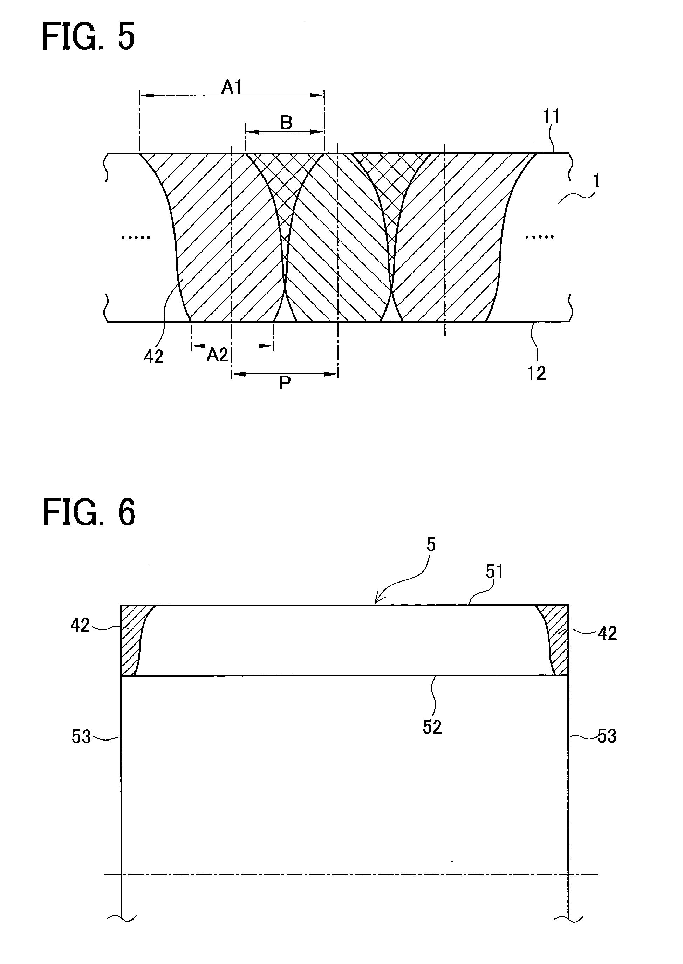

A detailed description of preferred embodiments of a method and a device for manufacturing an endless metal ring, and the endless metal ring, according to the present invention will now be given referring to the accompanying drawings. FIG. 1 shows a manufacturing process of an endless metal ring in the present embodiment according to the invention. FIGs. 2 to 4 are detailed views each showing a melting-solidifying step of the manufacturing process shown in FIG. 1. FIG. 5 is a schematic cross sectional view of a melted-solidified layer formed in an annular member in the melting-solidifying step shown in FIG. 1. FIG. 6 is a schematic cross sectional view of the melted-solidified layer formed in end portions of a ring element in an axial direction in the melting-solidifying step shown in FIG. 1.

### <Manufacturing Process of Endless Metal Ring>

As shown in FIG. 1, the manufacturing process of the endless metal ring includes (a) a step of forming an annular member, (b) a joining step, (c) a melting-solidifying step, (d) a first solution treatment (annealing) step, (e) a ring cutting step, (f) a rolling step, (g) a second solution treatment step, (h) a circumferential length adjustment step, and (i) an aging and nitriding step. The following explanation is given with a focus on the step (a) of forming an annular member, the joining step (b), and the melting-solidifying step (c), which are the distinctive features of the invention, and other remaining steps will be explained in case of necessity.

This annular-member forming step (a) is a step to form a cylindrical body having a predetermined length in an axial direction and opening in the axial direction. This annular-member forming step is achieved by a cutting and bending method of cutting a coiled band steel to a sheet and then bending the cut sheet, an extrusion molding method of extrusion-molding a predetermined billet, a pipe cutting method of cutting a pipe-shaped steel pipe, or the like. For instance, in the cutting and bending method shown in FIG. 1 (a), a band-shaped maraging steel sheet or plate Z is wound off from a coil and cut into a predetermined sized sheet material ZS, and then bending the sheet so that edge ends abut on each other. The bending is performed by use of a roll or a die. In the extrusion molding method (not shown), a billet formed in a hollow shape is inserted in a container, a mandrel (a core rod) is inserted in the billet, and then the billet is pressed with a ram to be extruded from an opening of the die to mold an annular member. At that time, the billet, the ram, and others are preferably heated at on the order of 1000 to 1300°C. This is to enhance plastic flowability of the billet, thereby enabling reducing extrusion load.

The thickness of the annular member 1 is on the order of 0.4 to 0.5 mm. The diameter of the annular member 1 is on the order of 100 to 200 mm. The maraging steel used in the present embodiment inevitably contains iron, nickel, and molybdenum and also additionally contains cobalt, titanium, aluminum, and others as needed. The content of nickel in the maraging steel is not limited to 18 weight% and may be on the order of 20 to 25 weight%. The content of molybdenum is preferably at least 3 weight% or more. If nickel is increased, the austenite phase is easily formed. However, if molybdenum higher in melting point than other alloy elements is not contained to a certain degree, the molybdenum segregated area is less likely to be formed in the course of solidification.

The joining step (b) is a step to join the ends to each other when the annular-member forming step uses the cutting and bending method. This joining method includes a welding method to weld the ends to each other, a method of removing oxidation coating of the ends and diffusion joining them, and other methods. In the welding method shown in FIG. 1 (b), a welding device 2 is placed to face an abutting part 13 of the annular member 1, moving the annular member 1 or a torch of the welding device 2 in an axial direction (a direction indicated by an arrow F) to perform abutting welding. Suitable for the welding device 2 is for example a laser welding device or a plasma welding device capable of locally melting. In case shrinkage occurs in a boundary between a weld portion 21 and a base material 22, it causes strength degradation. Thus, such a welding condition (spot diameter, focus distance, welding speed, etc.) as not to cause shrinkage are selected. In a case where the annular-member forming step uses the extrusion molding method or the pipe cutting method, the joining step is naturally omitted.

The melting-solidifying step (c) is a step of heating and cooling from the outer circumference side of the annular member 1 by a local heating device 3 placed above the outer circumference of the annular member 1 to aim at it, hereby continuously forming melted-solidified layers 4 (41, 42, 43) on the outer circumference of the annular member 1. As the method of forming the melted-solidified layers, various methods are available as shown in FIGs. 2 to 4. The local heating device 3 is preferably the laser welding device or plasma welding device used in the welding device 2. In addition to cost reduction resulting from commonality of facilities, the molybdenum segregated area in the melted-solidified layers 4 can be formed to nearly equal to the weld portion 21. Thus, a segregated amount of the molybdenum segregated area can be made nearly uniform in the circumferential direction.

As shown in FIGs. 2 to 4, the local heating device 3 includes a heating torch 31 and a cooling nozzle 32. The heating torch 31 is put face-to-face with and at a predetermined distance from the outer circumference of the annular member 1 in a normal direction. The diameter of heat input from the heating torch 31 is preferably set to be larger than that during welding. This is because since the abutting part 13 having a slight gap is melted during welding, sag or burn-through of molten metal may be caused, whereas such a trouble is less caused in the melted-solidified layers 4 and a processing time can be shortened. However, if the diameter of heat input from the heating torch 31 is too large, it may deform the shape of the annular member 1 and thus it is preferable to select an appropriate heat input diameter causing no deformation due to continuous melting and solidifying.

As shown in FIGs. 2 to 4, the local heating device 3 includes the cooling nozzle 32 adjacent to and behind the heating torch 31 in a feed direction. The cooling nozzle 32 is inclined so that its lower end is closer to the heating torch 31. The cooling nozzle 32 is arranged to inject inert gas such as compression air, nitrogen gas, and argon gas to forcibly rapidly cool a portion melted by the heating torch 31.

As the forced cooling method, there is also a method of cooling the annular member 1 from the inner circumference side thereof, instead of using the above cooling nozzle 32. In one example of such methods, a retaining device 7 for retaining the inner circumference side of the annular member 1 is provided with a recirculation pipe (not shown) for recirculating cooling water. If the amount of heat input from the heating torch 31 is small, self-cooling may be adopted instead of forced cooling.

The method shown in FIG. 2 is a method of forming linear melted-solidified layers 41 each extending along the axial direction of the annular member 1. By moving the retaining device 7 retaining the annular member 1 in the axial direction (in a direction indicated by an arrow F), each linear melted-solidified layer 41 is formed to extend continuously from a front end to a rear end of the annular member 1. Those linear melted-solidified layers 41 are formed to overlap one another so that adjacent layers 41 are continuous in the circumferential direction. To overlap the adjacent layers 41 one on another, the retaining device 7 rotates the annular member 1 by a fixed angle in the circumferential direction every time one layer 41 is formed. Since those linear melted-solidified layers 41 are formed in symmetric positions with respect to the axis of the annular member 1 (i.e., in half-turn, opposite positions), the layers 41 are less likely to be affected by the heat-input temperature in respective adjacent layers 41.

The method shown in FIG. 3 is a method of forming a plurality of annular melted-solidified layers 42 at predetermined intervals in the axial direction. Each of the annular melted-solidified layers 42 is formed by rotating, one turn, a rotary shaft of the retaining device 7 retaining the annular member 1 in the circumferential direction (in the direction indicated by the arrow R). In the case of using the welding method in the joining step in FIG. 1 (b), the layers 42 are formed to intersect with the weld portion 21 extending in the axial direction. At that time, the weld portion 21 is melted and solidified again, and thus the layers 42 are each formed with a molybdenum segregated area continuous in the circumferential direction. The layers 42 may be formed over the entire circumference so as to make adjacent layers 42 overlap each other. Alternatively, they may be formed only in a site targeted for strengthening.

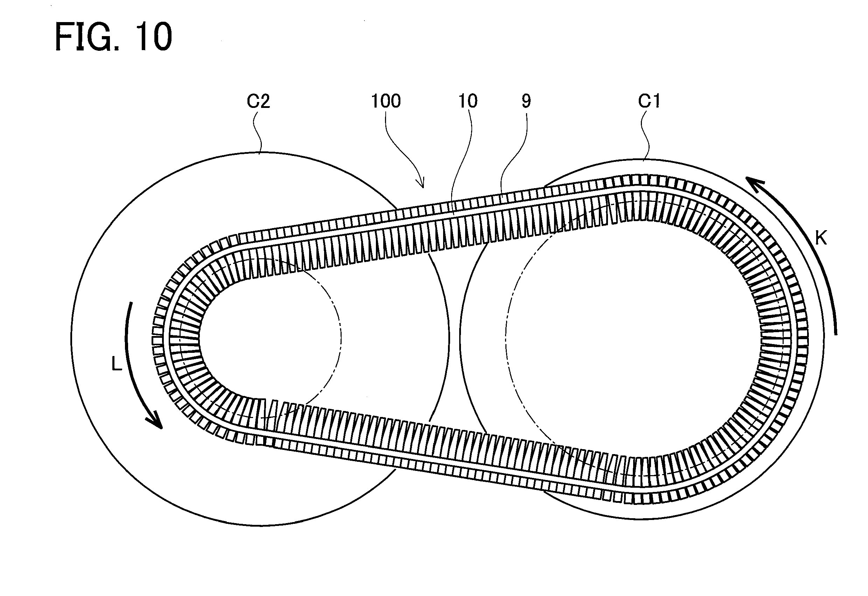

FIG. 5 (a Q-Q cross section in FIG. 3) schematically shows a state where the adjacent annular melted-solidified layers 42 overlap each other. As shown in FIG. 5, the annular melted-solidified layers 42 are formed to penetrate from an outer circumferential surface 11 to an inner circumferential surface 12 of the annular member 1. The annular member 1 is heated by the local heating device 3 placed above the outer circumference of the annular member 1 to aim it, so that each layer 42 is large on an outer circumference side A1 and small on an inner circumference side A2 of the annular member 1. At that time, a feed pitch P is set so that a lapping margin B between the adjacent layers 42 is enough to make the layers 42 overlap at least on the outer circumference side A1. This is because, in use as the endless metal ring 10 (see FIG. 10), the stress amplitude acting on the outer circumference side of the endless metal ring 10 is larger than on the inner circumference side, leading to large influence on fatigue strength.

FIG. 6 (the Q-Q cross section in FIG. 3) schematically shows a state where the adjacent annular melted-solidified layers 42 do not overlap and the layers 42 are formed only in the sites targeted for strengthening. As shown in FIG. 6, the layers 42 are formed in end portions 53 of the ring element 5 in the axial direction mentioned later. This is because, in use as the endless metal ring 10 (see FIG. 10), the stress amplitude acting on the axial end portions 53 of the endless metal ring 10 is larger than on an axial central portion, leading to large influence on fatigue strength. In this case, similarly, each layer 42 is formed to penetrate from an outer circumference 51 to an inner circumference 52 of the ring element 5. The ring element 5 may be produced by cutting at the same time when the layers 42 are formed in the axial end portions 53. For instance, there is a method of simultaneously performing melting-solidifying and cutting of the axial end portions 53 while supplying assist gas to a laser welding device.

The method shown in FIG. 4 is a method of forming a spiral melted-solidified layer 43 extending along the outer circumference of the annular member 1. This layer 43 is formed spirally on the outer circumference of the annular member 1 by moving the retaining device 7 retaining the annular member 1 at a feed speed V in the axial direction while rotating the rotary shaft of the retaining device 7 in the circumferential direction (the direction indicated by the arrow R). The spiral melted-solidified layer 43 may be formed over the entire circumference so that adjacent portions, or adjacent turns, of the layer 43 overlap each other, but instead may be formed only in a site targeted for strengthening. The concept of overlapping the adjacent portions of the spiral layer 43 each other is similar to in the case of the annular melted-solidified layers 42 (see FIG. 5). Further, the concept of forming the spiral melted-solidified layer 43 only in the site targeted for strengthening, without overlapping the adjacent portions of the spiral layer 43, is also basically similar to in the case of the annular melted-solidified layers 42 (see FIG. 6). However, when the spiral melted-solidified layer 43 is to be formed in the axial end portions 53 of the ring element 5, it is necessary to irregularly feed the local heating device 3 in the axial direction so that the feed speed V in the axial direction is nearly zero in a position corresponding to each axial end portion 53 of the ring element 5.

The first solution treatment (annealing) step shown in FIG. 1 (d) is a step of homogenizing the hardness of the annular member 1 that is partially increased in the course of welding and melting-solidifying. Thus, this first solution treatment (annealing) step has only to be performed as needed. The ring cutting step (e) is a step of severing the ring element 5 with a width corresponding to the endless metal ring 10 in consideration of elongation in the subsequent rolling step. The rolling step (f) is a step of rolling the cut ring element with the predetermined width to a predetermined length required as a rolled ring element 6. This rolling increases the hardness. The second solution treatment (g) is a step of recrystallizing the rolled structure of the rolled ring element 6 to restore the metal crystal particle shape deformed in the rolling. The circumferential length adjustment step (h) is a step of calibrating the circumferential length required as the rolled ring element 6 to enable stacking of a plurality of ring elements 6 to form the endless metal ring 10. The aging-nitriding step (i) is a step of performing an aging treatment to provide predetermined hardness of the rolled ring element 6 whose circumferential length has been calibrated and a nitriding treatment to form a uniform nitride layer. The steps from the first solution treatment (annealing) step (d) to the aging-nitriding step (i) are conventionally known and thus their details are not explained herein.

FIG. 10 shows the endless metal ring 10 manufactured in the above manufacturing process. As shown in FIG. 10, a plurality of elements 9 are engaged with the endless metal ring 10 consisting of a plurality of stacked ring elements 6 to constitute an endless metal belt 100. This belt 100 functions to transmit drive power between the drive shaft pulley C1 on a drive side and the driven shaft pulley C2 on a driven side. Accordingly, the endless metal ring 10 is repeatedly subjected to bending deformation in passing over each of the pulleys C1 and C2, and is subjected to repeated tensile stress. An explanation is given below to the mechanism of how the endless metal ring 10 manufactured in the above manufacturing process has an improved fatigue strength as compared with an endless metal ring manufactured in a conventional manufacturing process.

### <Increase in Residual Austenite>

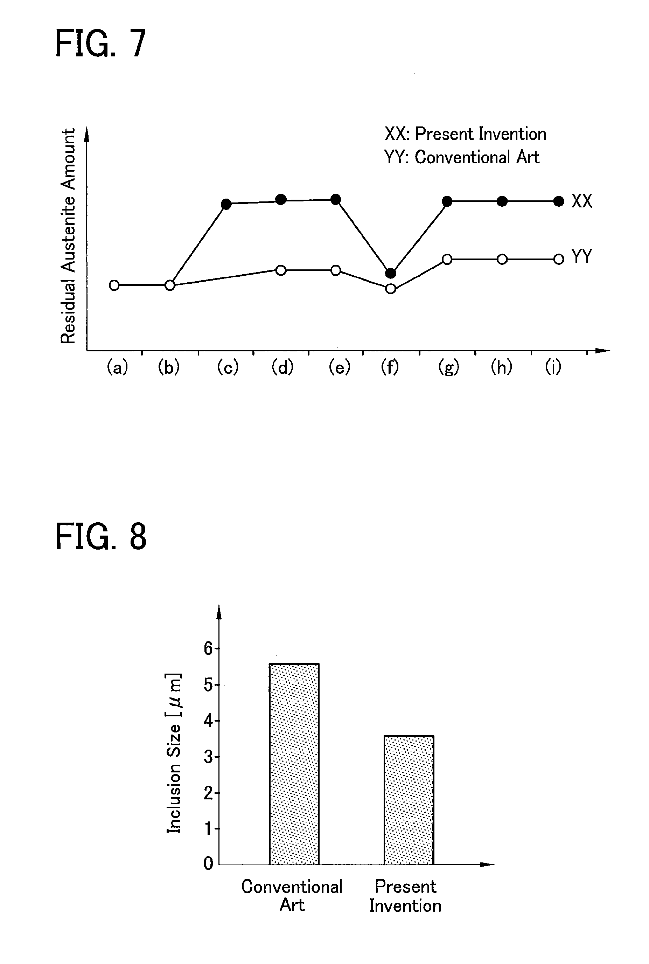

The endless metal rings made of the maraging steel having the following components in the above manufacturing process were subjected to measurement of the austenite amounts in each step. FIG. 7 is a graph showing the residual austenite amounts in each manufacturing step shown in FIG. 1. Signs (a) to (i) in the horizontal axis represent the above manufacturing steps. The vertical axis represents the residual austenite amounts indicated by volume percentages (%). The residual austenite amounts were measured by analysis of metal crystal structure by use of an X-ray diffractometer.

An alloy composition ratio (weight%) of maraging steel is that nickel (Ni) is about 18%, cobalt (Co) is about 9%, molybdenum (Mo) is about 5%, titanium (Ti) is about 0.45%, aluminum (Al) is about 0.1%, and carbon (C) is 0.03% or less.

As shown in FIG. 7, in the conventional manufacturing process, the residual austenite amount is almost constant and no increase is detected. In contrast, in the manufacturing process in the present embodiment according to the invention, the residual austenite amount increases nearly double in the melting-solidifying step (c), decreases once in the rolling step (f), and returns to the previous increased residual austenite amount in the second solution treatment step (g), and subsequently does not vary in particular.

This is conceived that when segregation of the alloy compositions (mainly, molybdenum) occurs in the course of melting-solidifying, austenite is stabilized in the segregated portion, the austenite remains left without transforming into martensite even when returned to room temperature. The residual austenite amount at that time is about 3% by volume. The residual austenite amount of about 2 to 3% by volume is a value whereby remarkable improvement of fatigue strength can be expected. In the rolling step (f), the rolling is performed at a rolling reduction of about 50%, so that martensitization of metastable austenite phase advances and thus the austenite amount temporarily decreases.

### <Reduction of Non-metallic Inclusion>

Successively, TiN which is non-metallic inclusion was measured on inclusion size before and after the melting-solidifying step (c). FIG. 8 is a graph showing the size of non-metallic inclusion before and after the melting-solidifying step of the manufacturing process shown in FIG. 1. In the steps from the first solution treatment (annealing) step (d) to the aging-nitriding step (i), the size of the TiN inclusion does not change. Thus, this measurement result is interpreted as the TiN inclusion size in the endless metal ring 10. The alloy composition ratio (weight %) of maraging steel is similar to that in the above measurement of the residual austenite amount.

The TiN inclusion size is measured in such a manner that 5 gram of a material is extracted and dissolved in acid, and then the material filtered with a 3-µm filter is observed through an electronic microscope. Based on the measurement result, a maximum inclusion size is estimated by an extremal statistics method.

A conventional inclusion size shown in FIG. 8 is the maximum inclusion size extracted from the material before the melting-solidifying step (c), which is about 5.8 µm. On the other hand, the inclusion size in the present embodiment according to the invention is the maximum inclusion size extracted from the material after the melting-solidifying step (c), which is about 3.6 µm. This reveals that the maximum inclusion size greatly decreases in the melting-solidifying step (c). It is thus clear that the effect of suppressing fatigue failure which initiate at inclusion.

The reason why the maximum inclusion size greatly decreases at that time is presumed that the non-metallic inclusion such as TiN contained in the material is dissolved during melting and rapidly cooled by self-cooling or forced cooling due to local melting in the aforementioned melting-solidifying step (c), thereby suppressing growth of the non-metallic inclusion during re-crystallization in the course of solidification.

### <Improvement of Fatigue Strength>

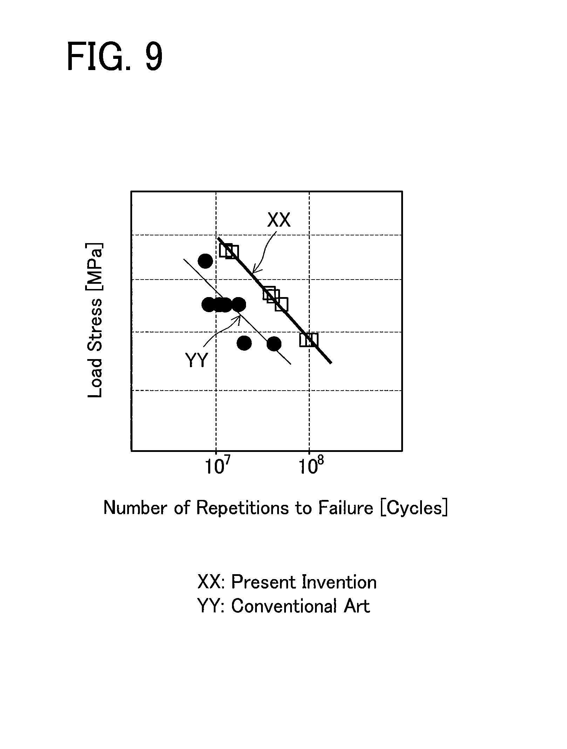

Next, regarding the endless metal ring 10 fabricated in the above manufacturing process, a result of a fatigue test (a dedicated test) on a ring alone is explained below. FIG. 9 is a graph (S-N curves) representing fatigue life of the endless metal ring manufactured in the manufacturing process shown in FIG 1. The vertical axis represents load stress (stress amplitude) and the horizontal axis represents the number of repetitions to failure. The horizontal axis is a logarithmic scale.

As shown in FIG. 9, the fatigue life of the endless metal ring 10 manufactured in the manufacturing method of the present embodiment according to the invention is increased about two or three times longer than the conventional one. Even when the load stress (stress amplitude) is increased, that tendency remains unchanged. In recent years, therefore, the endless metal ring 10 is also very effective in increasing a gear ratio range in the CVT in order to further improve the fuel efficiency.

### <Mechanism of Improvement of Fatigue Strength>

From the above details, the mechanism of improving the fatigue strength of the endless metal ring 10 is briefly explained as below. Specifically, the endless metal ring 10 is made of low carbon alloy steel (maraging steel) containing molybdenum. The ring element 5 is formed, over its entire circumference or in a part continuous in the circumferential direction, with the molybdenum segregated area in which the molybdenum with a high melting point is preferentially solidified. In the molybdenum segregated area, much austenite phases are left. Austenite transforms into martensite (deformation induced martensite) under external stress. At that time, the crystal structure changes from a face-centered cubic lattice to body-centered cubic lattice with an expanded volume. Thus, compression stress acts on crystal grain boundary that is likely to be cracked. This can suppress development of cracks against external stress. That is, the austenite phase left in the molybdenum segregated area formed in the melted-solidified layers 4 (41, 42, 43) provides an effect of suppressing crack growth or development.

When the melted-solidified layers 4 (41, 42, 43) are formed by local heating, the non-metallic inclusion such as TiN contained in the material is refined in the course of solidification by rapid cooling. Because of refining of the non-metallic inclusion, the non-metallic inclusion which may initiate inner crack(s) is significantly decreased. Specifically, the melted-solidified layers 4 (41, 42, 43) formed by local heating can also provide an effect of reducing cracks that initiate at inclusion in a very high cycle region (a region exceeding 10⁷ cycles).

From the above, the endless metal ring 10 produced from the ring elements 5 formed with the melted-solidified layers 4 (41, 42, 43) on its entire circumference or in a part continuous in the circumferential direction is formed with the molybdenum segregated area in which much austenite phases are left and also the non-metallic inclusion which may initiate cracks is reduced, thus largely improving the fatigue strength.

### <Operations and Effects>

As explained above in detail, according to the manufacturing method of the endless metal ring 10 in the present embodiment, the melted-solidified layers 4 (41, 42, 43) are formed on the outer circumference of the annular member 1 made of maraging steel containing molybdenum. Thus, in the melted-solidified layers 4 (41, 42, 43), molybdenum (Mo) with a higher melting point than other alloy elements is preferentially solidified, forming a segregated area(s). Molybdenum is an austenite stabilizing element and therefore the molybdenum segregated area contains much residual austenite phases in portions where austenite should inherently transform into martensite.

Since the melted-solidified layers 4 (41, 42, 43) are arranged to be continuous in the circumferential direction of the ring element 5, the ring element 5 is formed with the molybdenum segregated area continuous in the circumferential direction. That is, the residual austenite phases left by the molybdenum segregated area are formed to be continuous in the circumferential direction of the ring element 5. Austenite partially transforms into martensite (deformation induced martensite) under pressure from outside. At that time, a crystal structure changes from a face-centered cubic lattice to a body-centered cubic lattice with an expanded volume. Thus, compression stress acts on a crystal grain boundary that is likely to be cracked. This can suppress development of cracks against external stress. The amount of residual austenite at that time is preferably on the order of 2 to 3% by volume which is effective for fatigue property. The present invention can realize this. The endless metal ring 10 manufactured by the above method can provide greatly increased fatigue life even when a constant stress amplitude repeatedly acts on the endless metal ring 10.

According to the present embodiment, since the melted-solidified layers 4, (41, 42, 43) are formed by locally heating and cooling the outer circumference of the annular member 1, the molybdenum segregated area can be formed without deforming the annular member 1.

Because of the local heating and cooling, the melted-solidified layers 4 (41, 42, 43) are cooled immediately after they are melted. Accordingly, although the non-metallic inclusion such as TiN contained in a row material is dissolved in the course of melting, the cooling speed in the course of solidifying is fast and thus the growth of non-metallic inclusion during recrystallization is suppressed, thereby prompting refining. This refining of non-metallic inclusion enables suppression of fatigue failure which is apt to initiate at inclusion. Consequently, the fatigue life of the endless metal ring 10 can be further improved.

In this case, because of the local heating and cooling, it is unnecessary to perform re-melting in a raw-material manufacturing step as in the technique of Patent Document 3 and there is less influence on productivity. Furthermore, limitation to use only high-pure raw material is reduced, contributing to cost reduction. The solution (annealing) heat treatment is performed after the melting-solidifying step as needed. This can uniformize molybdenum in the molybdenum segregated area.

According to the present embodiment, since the melted-solidified layers 42 and 43 are formed by circularly or spirally heating and cooling the outer circumference of the annular member 1, the circular or spiral width and feed pitch are arbitrarily set so that the melted-solidified layers 42 and 43 are formed in the annular member over the entire circumference or in the part continuous in the circumferential direction. For instance, when the circular or spiral width and feed pitch are set within the width of the ring element 5, the outer circumference of the ring element 5 can be formed with the melted-solidified layers 42 and 43 of at least one turn. Thus, the molybdenum segregated area can be formed on the entire circumference of the ring element 5 or may be formed only in a part desired for strengthening. This can ensure a predetermined residual austenite amount nearly equal in a predetermined width in the circumferential direction to improve the fatigue strength of the endless metal ring 10.

According to the present embodiment, since the melted-solidified layers 42 or 43 are formed in the axial end portions 53 of the ring element 5, the predetermined residual austenite amount in the axial end portions 53 of the ring element 5 can be endured nearly equal in the circumferential direction. The stress amplitude during use of the endless metal ring 10 in a CVT largely acts on the axial end portions 53 more than an axial central portion of the endless metal ring 10. Thus, the predetermined residual austenite amount can be ensured to be nearly equal in the circumferential direction in the axial end portions 53 of the endless metal ring 10 on which the stress amplitude will largely acts. This can effectively improve the fatigue strength of the endless metal ring 10.

According to the present embodiment, the melted-solidified layers 4 are formed of the plurality of linear melted-solidified layers 41 formed by heating and cooling the outer circumference of the annular member 1 in the axial direction so that adjacent ones of the layers 41 are continuous with each other. Thus, the predetermined residual austenite amount can be ensured to be nearly equal in the entire outer circumference of the annular member. Accordingly, the predetermined residual austenite amount can be ensured nearly equal in the entire circumference of the severed ring element 5 having a predetermined width. Herein, when the linear melted-solidified layers 41 are to be formed so that adjacent ones are continuous with each other, they do not always need to be continuous on the inner circumference side of the annular member 1 as long as the outer circumference side is continuous. This is because, in a case where the endless metal ring 10 is used in a CVT, the stress amplitude more largely acts on the outer circumferential side than on the inner circumferential side of the endless metal ring 10.

According to the present embodiment, the forced cooling can shorten the solidification time, thereby enabling forming the melted-solidified layers 4 (41, 42, 43) while maintaining the outer shape and thickness of the annular member 1. Since the re-crystallization speed of TiN and others in the course of solidification is fast, the growth of non-metallic inclusion is suppressed and thus refining can be further prompted. In addition, this further prompted refining of non-metallic inclusion can suppress the fatigue failure which is likely to initiate at inclusion. This makes it possible to further improve the fatigue life of the endless metal ring 10.

According to the present embodiment, since the heating is laser heating or plasma heating, even alloy steel containing alloy elements (e.g., molybdenum) with high heat input density and high melting point melts at high speed, thereby enabling forming the melted-solidified layers 4 (41, 42, 43) in a short time on the outer circumference of the annular member 1 made of maraging steel containing molybdenum. Thus, the productivity of the endless metal ring 10 is not inhibited. Since the laser heating or plasma heating is local heating and cooling, the refining of the non-metallic inclusion is prompted, thus suppressing fatigue failure which may initiate at inclusion.

According to the present embodiment, the annular member 1 is formed by joining the ends of a plate material made of maraging steel. This annular member 1 can be easily manufactured with an arbitrary outer diameter. This joining method includes diffusion joining and others as well as laser welding or plasma welding.

According to the present embodiment, since the annular member 1 is formed by extrusion molding of a billet made of maraging steel, a seamless annular member 1 can be manufactured. Since the seamless annular member 1 made of maraging steel containing molybdenum is formed, the residual austenite is left to be continuous in a more uniform amount in the circumferential direction in the molybdenum segregated area formed by melting and solidifying.

According to another embodiment, it is sufficient to provide the retaining device 7 retaining the annular member 1 rotatably in the circumferential direction and the local heating device 3 placed to aim at the outer circumferential surface of the annular member 1. Thus, the melted-solidified layers 4 (41, 42, 43) can be formed in a short time to be continuous on the outer circumference of the annular member with a simple device. For instance, the retaining device 7 is configured to continuously rotate the annular member 1 in order to form the melted-solidified layers 42 or 43 in circular or spiral form and to intermittently rotate the annular member 1 in order to form a plurality of linear melted-solidified layers 41. Movement of the annular member 1 in the axial direction can be performed by the retaining device 7. Instead of moving the annular member 1 in the axial direction, the torch 31 of the local heating device 3 may be moved or swung.

According to another embodiment of the invention, since the endless metal ring 10 to be used in a vehicle CVT is made of low carbon alloy steel containing molybdenum and the ring element is melted and solidified over the entire circumference or in the part continuous in the circumferential direction, the molybdenum segregated area is formed in the entire circumference or the part continuous in the circumferential direction of the endless metal ring 10. Since molybdenum is an austenite stabilizing element, much austenite phases are left in the molybdenum segregated area. Austenite transforms into martensite (deformation induced martensite) under external stress. At that time, the crystal structure changes from a face-centered cubic lattice to a body-centered cubic lattice with an expanded volume. Thus, compression stress acts on crystal grain boundary that is likely to be cracked. This can suppress development of cracks against external stress. Consequently, the endless metal ring 10 can provide greatly increased fatigue life even when constant stress amplitude repeatedly acts on the endless metal ring 10. It is to be noted that the low carbon alloy steel forms less thermally transformed martensite, and thus can avoid an increase in hardness more than necessary and maintain predetermined elongation. According to the configuration of another embodiment of the invention, it is possible to make sure the predetermined residual austenite amount continuous in the circumferential direction of the endless metal ring 10 while maintaining the predetermined hardness and elongation, and improve fatigue strength to the stress amplitude repeatedly acting in the circumferential direction.

According to another embodiment, since the low carbon alloy steel is maraging steel, the excellent strength characteristic can be ensured by the aging treatment.

The aforementioned embodiments may be changed without departing from the essential characteristics of the invention.

For instance, although the above embodiments shows that the melted-solidified layers 4 (41, 42, 43) formed on the outer circumference of the annular member 1 are formed to penetrate from the outer circumference 11 to the inner circumference 12 of the annular member 1, they are not always necessary formed to penetrate to the inner circumference 12 of the annular member 1. This is because the stress amplitude that will act on the endless metal ring 10 used in a CVT is larger on the outer circumference side of the endless metal ring 10 than on the inner circumference side. In this case, the melted-solidified layers 4 (41, 42, 43) can be formed in a shorter time and thus the productivity can be further improved.

### INDUSTRIAL APPLICABILITY

The present invention is utilizable to a method and device for manufacturing an endless metal ring that will constitute a drive belt to circularly turn between a drive shaft pulley and a driven shaft pulley of a vehicle, a manufacturing device, and an endless metal ring.

### REFERENCE SIGNS LIST

- 1: Annular member
- 2: Welding device
- 3: Local heating device
- 4: Melted-solidified layer
- 5: Ring element
- 6: Rolled ring element
- 7: Retaining device
- 9: Element
- 10: Endless metal ring
- 11: Outer circumferential surface of annular member
- 12: Inner circumferential surface of annular member
- 31: Heating torch
- 32: Cooling nozzle
- 41: Linear melted-solidified layer
- 42: Circular melted-solidified layer
- 43: Spiral melted-solidified layer
- 53: Axial end of ring element
- 100: Endless metal belt

## Claims

1. A method of manufacturing an endless metal ring by cutting an annular member made of maraging steel containing molybdenum into a ring element having a predetermined width,
wherein the method includes forming a melted-solidified layer on an outer circumference of the annular member so that the melted-solidified layer is arranged to be continuous in a circumferential direction.

2. The method of manufacturing an endless metal ring according to claim 1, wherein the melted-solidified layer is formed by locally heating and cooling the outer circumference of the annular member.

3. The method of manufacturing an endless metal ring according to claim 1 or 2, wherein the melted-solidified layer is formed by spirally or circularly heating and cooling the outer circumference of the annular member.

4. The method of manufacturing an endless metal ring according to claim 3, wherein the melted-solidified layer is formed in an end of the ring element in an axial direction.

5. The method of manufacturing an endless metal ring according to claim 1 or 2, wherein the melted-solidified layer is formed of a plurality of linear melted-solidified layers formed by heating and cooling the outer circumference of the annular member in an axial direction so that adjacent ones of the linear melted-solidified layers are continuous with each other.

6. The method of manufacturing an endless metal ring according to any one of claims 2 to 5, wherein the cooling is forcibly performed.

7. The method of manufacturing an endless metal ring according to any one of claims 2 to 6, wherein the heating is laser heating or plasma heating.

8. The method of manufacturing an endless metal ring according to any one of claims 1 to 7, wherein the annular member is formed by joining end portions of a plate material made of the maraging steel.

9. The method of manufacturing an endless metal ring according to any one of claims 1 to 7, wherein the annular member is formed by extrusion-molding a billet made of the maraging steel.

10. A device of manufacturing an endless metal ring, the device being to be used in the method of manufacturing an endless metal ring according to any one of claims 1 to 9,
wherein the device includes a retaining device for retaining the annular member rotatably in a circumferential direction, and
a local heating device that will be placed to aim at an outer circumferential surface of the annular member.

11. An endless metal ring to be used in a continuously variable transmission for a vehicle,
wherein the endless metal ring is made of low carbon alloy steel containing molybdenum, and
a ring element is melted and solidified over an entire circumference or in a part continuous in a circumferential direction.

12. The endless metal ring according to claim 11, wherein the low carbon alloy steel is maraging steel.
